# EUROPÄISCHE PATENTSCHRIFT

(11) **EP 2 999 087 B1**
(45) Veröffentlichungstag und Bekanntmachung des Hinweises auf die Patenterteilung: **01.11.2017**
(21) Anmeldenummer: 14185608.8
(22) Anmeldetag: 19.09.2014
(51) Int. Cl.: H02K 1/02, H02K 1/14, H02K 1/24

(54) **Elektrische Maschine mit geringer magnetischer Nutstreuung**
Electric machine with low magnetic groove scattering
Machine électrique ayant une dispersion d'encoche magnétique faible

(43) Veröffentlichungstag der Anmeldung: 23.03.2016
(73) Patentinhaber: Siemens Aktiengesellschaft, 80333 München (DE)
(72) Erfinder: Fischer, Ralf, 90419 Nürnberg (DE); Petermaier, Korbinian, 80799 München (DE); Vollmer, Rolf, 36129 Gersfeld (DE)

(56) Entgegenhaltungen:
- EP-A1- 1 696 534
- WO-A1-2011/032201
- WO-A1-2013/147157
- WO-A2-2007/141489
- JP-A- 2008 182 782
- US-A1- 2009 113 696
- US-A1- 2013 119 816

## Beschreibung

Die Erfindung betrifft ein Aktivteil für eine elektrische Maschine, das als Stator oder Läufer ausgestaltet sein kann. Das Aktivteil weist Nuten zum Anordnen von Spulenwicklungen elektrischer Spulen auf. Zwischen benachbarten Nuten ist jeweils ein Steg ausgebildet, um welchen die Spulenwicklungen gewickelt sein können. Mittels des Steges wird ein magnetischer Fluss durch die Spulen geführt.

Unter einem Aktivteil wird im Zusammenhang mit der Erfindung ein weichmagnetisches Bauteil einer elektrischen Maschine verstanden, mittels welchem ein magnetischer Fluss durch die in den Nuten angeordneten Spulenwicklungen hindurchgeführt werden kann, um einen magnetischen Kreis der elektrischen Maschine zu schließen. Je geringer ein Streufluss des magnetischen Kreises ist, desto effizienter lässt sich die elektrische Maschine betreiben.

Aufgrund ihrer regelmäßigen Anordnung werden die Stege auch als Statorzähne beziehungsweise Läuferzähne bezeichnet. In den elektrischen Maschinen sind die Statorzähne und Läuferzähne sehr häufig einer hohen magnetischen Flussdichte ausgesetzt, da ihnen eine Flusssammelfunktion des Luftspaltflusses zukommt. Die Induktion in diesen Maschinenteilen liegt folglich höher als im Rest der Maschine. Bei hohen Flussdichten tritt jedoch eine Feldverdrängung auf, wie sie mit dem Prinzip der Entropiezunahme erklärt werden kann. Diese Feldverdrängung bewirkt, dass die magnetischen Feldlinien aus dem Zahnbereich in die benachbarte Nut gedrängt werden. Da dort der magnetische Widerstand deutlich größer als im Zahnmaterial ist, ist der magnetische Spannungsabfall auf diesen Weg größer. Es wird somit mehr Durchflutung benötigt, was wiederum den Wirkungsgrad der elektrischen Maschine verringert.

Aus der UK 1 114 562 ist ein Rotor für eine Reluktanzmaschine bekannt, der keine eigene magnetische Erregung, dafür aber Flussführungspfade zwischen magnetischen Polen des Rotors aufweist. Zur Verbesserung der Flussführung ist der Rotor laminiert ausgestaltet, wodurch sich eine magnetische Anisotropie ergibt, deren Vorzugsrichtung oder leichte Achse in der Ebene der Laminierungsschichten und deren schwere Achse quer zur Erstreckungsrichtung der Laminierungsschichten verläuft. Anders als bei einem herkömmlichen Rotor mit geblechtem Rotorkörper verlaufen die Laminierungsschichten also nicht senkrecht zur Rotationsachse, sondern entlang oder parallel zur Rotationsachse des Rotors.

Aus der JP 4343281 B2 ist ein Reluktanzrotor bekannt, bei dem die Flussführungspfade nicht durch eine Laminierung des weichmagnetischen Rotorkörpers ausgebildet ist, sondern durch eine mikrokristalline Anisotropie des Eisenkörpers.

Aus dem Dokument EP 1 696 534 A1 ist eine elektrische Maschine bekannt, bei welcher Statorzähne eines Stators aus einem magnetisch anisotropen Material gefertigt sind. Hierzu kann als Fertigungsmaterial ein magnetisches Pulver zugrunde gelegt sein. Ein Statorjoch des Stators kann ebenfalls aus einem magnetisch anisotropen Material gefertigt sein. Polschuhe der Statorzähne sind aus einem magnetisch isotropen Material gefertigt.

Der Erfindung liegt die Aufgabe zugrunde, eine elektrische Maschine streuungsarm auszugestalten.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Erfindungsgemäß ist ein Aktivteil für eine elektrische Maschine bereitgestellt, wobei das Aktivteil als Stator oder Läufer ausgestaltet ist. Für den Fall, dass es sich bei der elektrischen Maschine um eine Rotationsmaschine handelt, ist das Aktivteil also als Stator oder Rotor der Rotationsmaschine ausgestaltet. Das Aktivteil weist zumindest zwei Nuten zum Anordnen von elektrischen Spulenwicklungen einer elektrischen Spule der elektrischen Maschine auf. Zwischen benachbarten Nuten ist jeweils ein Steg bereitgestellt, welcher die Wandungen der Nuten bereitstellen oder darstellen kann. Der Steg ist dazu ausgestaltet, den magnetischen Kreis der elektrischen Maschine durch die Spule hindurch zu schließen, das heißt einen magnetischen Fluss durch die Spule hindurchzuführen. Dazu weist der Steg ferromagnetische, insbesondere weichmagnetische, Eigenschaften auf.

Es muss verhindert werden, dass ein zu großer Anteil des vom Steg zu führender magnetischen Flusses wegen der hohen Flussdichte aus dem Steg austritt und deshalb nicht im Steg, sondern parallel in den Nuten und der darin angeordneten elektrischen Spule verläuft. Hierzu weist der Steg zum Führen des magnetischen Flusses erfindungsgemäß ein Material auf, das zumindest bereichsweise eine magnetische Anisotropie mit einer leichten Achse und einer schweren Achse der Magnetisierbarkeit aufweist. Ein anderer Begriff für leichte Achse ist auch Vorzugsrichtung. Die leichte Achse ist parallel oder zumindest in einem Winkel von weniger als 25°, insbesondere weniger als 15°, zu einer Spulenachse der Spulenwicklungen der elektrischen Spule ausgerichtet, die den Steg umgibt.

Durch die Erfindung ergibt sich der Vorteil, dass ein Streufluss quer zur Spulenachse, das heißt ein Streufluss in einer Ebene parallel zur Wicklungsebene, durch die Ausrichtung der leichten Achse verringert wird.

Die Erfindung sieht vor, dass in dem Steg nur die Nutwand das Material aufweist und der Steg einen Kern aus einem isotropen weichmagnetischen Material aufweist. Die Nutwand ist dabei derjenige Teil des Stegs, welcher die angrenzende Nut begrenzt. Diese Ausführungsform verhindert, dass die magnetische Leitfähigkeit des Stegs durch das Material signifikant beeinträchtigt wird, was insbesondere bei großen Motoren, das heißt Motoren mit einer Leistung aus mehr als 10 KW, insbesondere mehr als 50 KW, vorteilhaft ist.

In einer Ausführungsform ist die schwere Achse mit dem kleinsten Wert der relativen Permeabilität senkrecht zur leichten Achse ausgerichtet. Dies kann durch eine entsprechende Materialwahl des anisotropen Materials erreicht werden. Eine schwere Achse senkrecht zur leichten Achse weist den Vorteil auf, dass ein Anteil des Streuflusses, der von dem Steg weg in Richtung der Nuten austritt noch weiter reduziert werden kann.

In einer Ausführungsform ist ein auf dem jeweiligen Steg angeordneter Polschuh aus einem isotropen ferromagnetischen, insbesondere weichmagnetischen, Material bereitgestellt. Der Polschuh kann hierdurch den im Steg gebündelten magnetischen Fluss besonders gut im Luftspalt verteilen oder andersherum kann ein vom Luftspalt zum Steg geführter magnetischer Fluss durch den Polschuh besonders gut zusammengeführt werden.

In einer Ausführungsform der Erfindung ist in dem Material des Stegs eine Gleitnut oder eine Gleitschiene ausgebildet und der Steg in einer zur Gleitnut oder Gleitschiene korrespondierenden Führungseinrichtung eines Magnetjoches des Aktivteiles eingeschoben. Unter Magnetjoch ist derjenige Teil des Aktivteils zu verstehen, welcher die Stege mechanisch verbindet und den Nutboden der Nuten bildet. Durch Ausbilden einer Gleitnut oder Gleitschiene in dem magnetischen anisotropen Material des Stegs ergibt sich der Vorteil, dass der Steg über einen Formschluss in dem Magnetjoch gehalten werden kann. Hierdurch kann auf ein Anschweißen oder Ankleben des Stegs an dem Magnetjoch verzichtet werden. Hierdurch ergibt sich eine vereinfachte Fertigbarkeit des Aktivteils.

Das Magnetjoch kann aus einem weichmagnetischen Material gefertigt sein. Beispielsweise kann das Magnetjoch in bekannter Weise auf der Grundlage von ferromagnetischen, insbesondere weichmagnetischen, Blechen als Blechpaket ausgestaltet sein.

Eine Ausführungsform der Erfindung sieht aber vor, dass das Magnetjoch des Aktivteils ebenfalls ein magnetisch anisotropisches Material aufweist und in dem Magnetjoch eine leichte Achse des Materials parallel zu einem Nutboden der Nuten oder zumindest in einem Winkel von weniger als 25°, insbesondere weniger als 15°, zu einer Ebene des Nutbodens ausgerichtet ist. Im Falle einer Rotationsmaschine ist also die leichte Achse bevorzugt entlang der Umfangsrichtung oder tangential zum Umfang des Rotors beziehungsweise Stators oder in einem Winkel von weniger als 25 Grad, insbesondere weniger als 15°, zu der jeweiligen Tangentialen ausgerichtet. Insbesondere ist diese Ausführungsform für den Fall vorgesehen, dass das Aktivteil als Stator ausgestaltet ist. Das Bereitstellen von magnetisch anisotropem Material im Magnetjoch weist den Vorteil auf, dass die elektromagnetische Verträglichkeit des Aktivteils verbessert ist. Mit anderen Worten kann eine Stärke eines Streuflusses, der aus dem Aktivteil nach außen aus der elektrischen Maschine austritt, mittels des Materials im Magnetjoch auf einen Wert kleiner als einen Höchstwert reduziert werden.

In einer Ausführungsform weist das verwendete magnetische anisotrope Material nur eine einzige leichte Achse auf. Hierdurch ist die Flussführung auch bei einer Bewegung des Aktivteils in Bezug auf die Richtung stabilisiert, da der magnetische Fluss seine Richtung nicht zwischen mehreren leichten Achsen wechseln kann.

Als besonders geeignet hat es sich erwiesen, wenn eine relative magnetische Permeabilität des Materials entlang der leichten Achse einen Wert größer als 15, insbesondere größer als 20, und entlang der schweren Achse einen Wert kleiner als 5, insbesondere kleiner als 2 aufweist. Hier kann die feldführende Eigenschaft des Stegs einerseits mit der Unterdrückung des Streufeldes besonders gut kombiniert werden. Um die beschriebenen magnetischen Eigenschaften zu erhalten, sind als Parameter bei der Herstellung des Läufers die Legierung, der Temperprozess beim Ausgestalten des Stegs sowie das Magnetfeld, mit welchem die Anisotropie eingeprägt wird, verfügbar. Einfache Versuche ermöglichen hier das Parametrieren des Herstellungsprozesses, um die beschriebenen Werte für die relative magnetische Permeabilität zu erhalten. Die Anisotropie ist insbesondere durch eine durch eine magnetokristalline Anisotropie bewirkt.

Besonders geeignet ist ein Material, welches eine magnetische Sättigung bei einer Flussdichte von mehr als 0,8 Tesla, insbesondere bei mindestens 1,0 Tesla aufweist. Hierdurch ergibt sich der Vorteil, dass der magnetische Fluss effizient zum Antrieb des Läufers genutzt werden kann.

Um sämtliche beschriebenen magnetischen Eigenschaften zu realisieren, sieht eine Ausführungsform der Erfindung vor, dass das Material Neodym-Eisen-Bor, NdFeB, aufweist. Dieses Material ist in Legierungen erhältlich, bei welchen die relative magnetische Permeabilität auf die beschriebenen Werte eingestellt werden kann und durch eine Koerzitivfeldstärke von weniger als zehn Kiloampere pro Meter die beschriebenen feldführenden Eigenschaften im Steg ausgebildet werden können. Das Material ist also kein Permanentmagnet, sondern weist flussführende Eigenschaften auf.

Wie bereits ausgeführt, gehört zu der Erfindung auch eine elektrische Maschine mit einem Stator mit Magnetspulen und mit einem Läufer, wobei erfindungsgemäß der Stator und/oder der Läufer jeweils ein Aktivteil aufweist, das eine Ausführungsform des erfindungsgemäßen Aktivteils darstellt.

Insbesondere handelt es sich bei dem in der elektrischen Maschine bereitgestellten Aktivteil um ein solches, mittels welchem eine magnetische Erregung in der Maschine erzeugt wird, also mittels des jeweiligen Aktivteils und mittels der in den Nuten des Aktivteils angeordneten Spulenwicklung elektrisch die magnetische Erregung für die Maschine erzeugt wird. In Stegen und Polschuhen, die von einer elektrisch erregten Spulenwicklung gegeben sind, ist der magnetische Fluss besonders groß, so dass hier die Verwendung eines anisotropen Materials besonders vorteilhaft ist. Im Unterschied hierzu kann im Generatorbetrieb eine passiv durchflutete Spule vorteilsbringend einen reichmagnetischen Polschuh ohne magnetische Anisotropie aufweisen, um hierdurch einen möglichst großen Anteil des Flusses mittels des Polschuhs einzufangen und durch die Generatorspule zu führen.

Zu der Erfindung gehört auch ein Verfahren zum Herstellen des Aktivteils gemäß der Erfindung. Das Verfahren umfasst die Schritte des Ausbildens von Nuten zum Anordnen von Spulenwicklungen und des Ausbildens jeweils eines Stegs zwischen benachbarten Nuten. In einem Material jedes Stegs wird jeweils eine magnetische Anisotropie bereitgestellt, wobei bei jedem Steg eine leichte Achse der Anisotropie parallel oder zumindest in einem Winkel von weniger als 25°, insbesondere weniger als 15°, der Spulenachse der Spule ausgerichtet wird, die den Stege umgibt. Die Erfindung sieht vor, dass in dem Steg nur die Nutwand das Material aufweist und der Steg einen Kern aus einem isotropen weichmagnetischen Material aufweist.

In einer Ausführungsform wird jeder Steg durch Pressen eines Pulvers und/oder Granulats ausgebildet. Das Pulver und/oder Granulat weisen jeweils das Material auf. Während des Pressens wird gleichzeitig das Pulver und/oder Granulat mit einem Magnetfeld beaufschlagt. Hierdurch wird während des Pressens die Anisotropie in dem Material eingeprägt. Diese Ausführungsform weist den Vorteil auf, dass der Steg eine frei mittels der entsprechenden Pressform vorgebbare Gestalt aufweisen können.

Im Folgenden sind Ausführungsbeispiele der Erfindung beschrieben. Hierzu zeigt:
- FIG 1: eine schematische Darstellung eines Längsschnitts durch eine Ausführungsform der erfindungsgemäßen Maschine,
- FIG 2: eine schematische Darstellung eines Querschnitts durch einen Stator der elektrischen Maschine von FIG 1, wobei der Stator als erfindungsgemäßes Aktivteil ausgestaltet ist,
- FIG 3: eine schematische Darstellung eines Querschnitts eines Statorzahns eines Stators mit eine Streufluss in Nuten des Stators,
- FIG 4: eine schematische Darstellung eines Querschnitts eines Statorzahns,
- FIG 5: eine schematische Darstellung eines Querschnitts durch einen Statorzahn eines Aktivteils und
- FIG 6: eine schematische Darstellung eines Querschnitts eines Statorzahns eines Aktivteils gemäß einer Ausführungsform der Erfindung.

Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

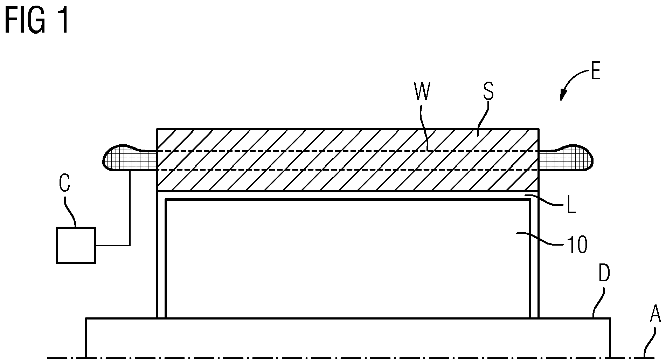

In FIG 1 ist eine elektrische Maschine E im Längsschnitt gezeigt, bei der es sich z.B. um einen Synchronmotor handeln kann. In FIG 1 stellt eine Rotationsachse A auch eine Symmetrieachse der Darstellung dar. Die elektrische Maschine E umfasst einen Stator S, in welchem Wicklungen elektrischer Spulen W angeordnet sind, wobei in FIG 1 nur eine der Spule W dargestellt ist. Die Spulen W können durch ein Drehstromquelle C abwechselnd bestromt werden, wodurch im Inneren des Stators S ein magnetisches Drehfeld in einem Luftspalt L der elektrischen Maschine E entsteht. Die Drehstromquelle C kann beispielsweise ein Wechselrichter sein oder ein festfrequentes elektrisches Versorgungsnetz. Die elektrische Maschine E kann auch als Generator ausgestaltet sein, wobei die Drehstromquelle C entfallen oder durch einen Gleichrichter ersetzt sein kann.

Im Inneren des Stators S kann sich ein Rotor 10 befinden, der drehfest mit einer Welle D verbunden sein kann. Die Welle D ist um die Rotationsachse A drehbar in dem Stator S gelagert.

Der Rotor 10 stellt einen Läufer der elektrischen Maschine E dar. Der Rotor 10 kann eine Ausführungsform des erfindungsgemäßen Aktivteils sein. Auch der Stator S kann eine Ausführungsform des erfindungsgemäßen Aktivteils sein.

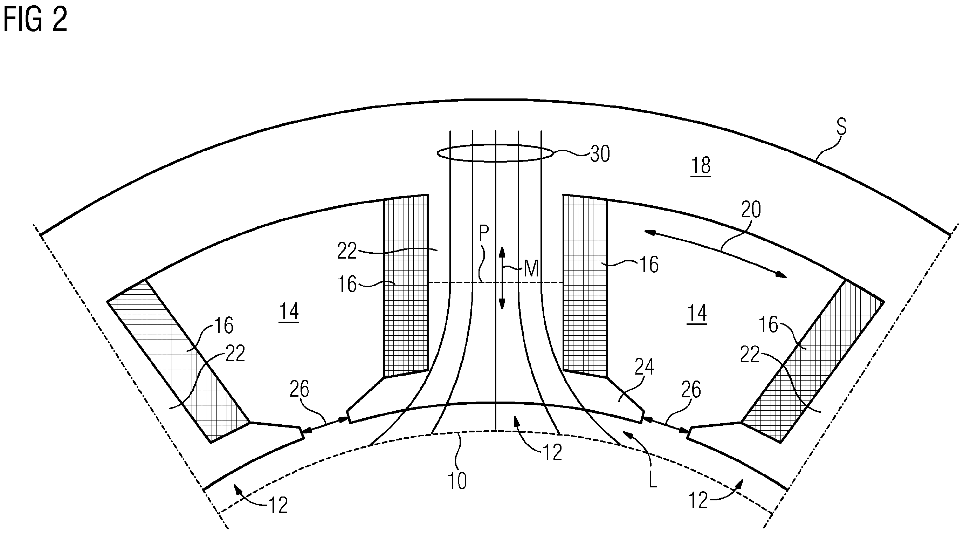

Im Folgenden werden unter Verweis auf FIG 2 bis FIG 6 Ausführungsbeispiele für die Erfindung anhand des Stators S erläutert. Diese Erläuterungen treffen auch für entsprechende Ausgestaltungen eines erfindungsgemäßen Rotors und eines erfindungsgemäßen Linearläufers zu.

Wie in FIG 2 dargestellt, kann der Stator S Statorzähne 12 aufweisen, zwischen den sich Nuten 14 ergeben. In den Nuten 14 können Spulenwicklungen 16 der Spulen W angeordnet sein. Jeder Statorzahn 12 kann dabei jeweils von den Spulenwicklungen 16 einer der elektrischen Spulen W umwickelt oder umgeben sein. Durch einen Anordnung der Spulenwicklungen 16 ergibt sich eine Wicklungsebene P, die sich senkrecht zur Zeichnungsebene von FIG 2 erstreckt. Senkrecht auf der Wicklungsebene P steht die Spulenachse M. Die Statorzähne 12 können an einem Magnetjoch 18 entlang dessen Innenumfang 20 angeordnet sein. Die Wicklungsebene P ist tangential zum Innenumfang 20 angeordnet. Die Spulenachse M ist radial zur Rotationsachse A ausgerichtet.

Jeder Statorzahn 12 kann einen Steg 22 aus einem magnetisch leitfähigen Material aufweisen, d.h. einem ferromagnetischen, insbesondere einem weichmagnetischen, Material. Der Steg 22 stellt einen Zahnhals des Statorzahns 12 dar. An dem Steg 22 kann in an sich bekannter Weise ein Polschuh 24 angeordnet sein, welcher den Steg 22 zum Luftspalt L und zum Rotor 10 hin abgrenzen kann. Zwischen den Polschuhen 24 ergeben sich durch deren Abstand zwischen jeweils benachbarten Polschuhen 24 Pollücken 26.

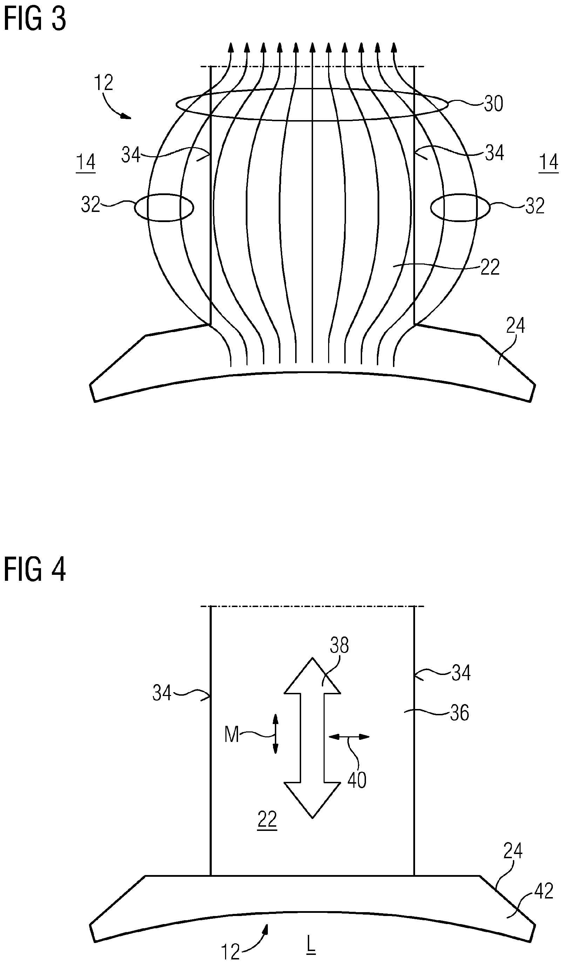

Bei den Spulenwicklungen 16 kann es sich um Erregerspulen handeln, die in den Statorzähnen 12 jeweils einen magnetischen Fluss 30 einprägen können. Der magnetische Fluss 30 soll idealerweise vollständig im Steg 22 geführt sein. Es soll also vermieden werden, dass ein Streufluss 32, wie in FIG 3 veranschaulicht, aus Nutwandungen 34 des Stegs 22 in die (in FIG 3 nicht mehr dargestellten) Spulenwicklungen 16 in der Nut 14 austritt. Die Induktion in den Statorzähnen 12 verursacht die Feldverdrängung des magnetischen Flusses 30, sodass es zum Streufluss 32 kommt. Dabei kann es sogar sein, dass die Feldlinien auch die Nut 14 überqueren und in den benachbarten Statorzahn 12 eindringen, was den größten magnetischen Widerstand für den Flussweg zur Folge hat.

Wie in FIG 4 bis FIG 6 veranschaulicht, kann bei der elektrischen Maschine E hierzu in den Stegen 22 ein magnetisch anisotropes Material 36 bereitgestellt sein. Das Vorhandensein des Materials ist in FIG 4 bis FIG 6 jeweils durch eine Ausrichtung einer leichten Achse 38 des Materials 36 verdeutlicht.

In FIG 4 ist gezeigt, wie das Material 36 vollständig im ganzen Steg 22 bereitgestellt sein kann. Die leichte Achse 38 ist dabei bevorzugt parallel zur Spulenachse M ausgerichtet. Eine schwere Achse 40 ist bevorzugt senkrecht zur leichten Achse 38 ausgerichtet, das heißt parallel zur Wicklungsebene P. Die leichte Achse 38 und die Spulenachse M können auch einen Winkel einschließen, der kleiner als 25 Grad, insbesondere kleiner als 15 Grad, ist. Durch Ausrichten der leichten Achse 38 parallel zur Spulenachse M und insbesondere Ausrichten der schweren Achse 40 quer, insbesondere senkrecht zur Spulenachse M, wird der Streufluss 32, der aus den Nutwänden 34 austritt, verringert im Vergleich zu einem Steg, der vollständig aus einem isotropen, weichmagnetischen Material ausgestaltet ist.

In FIG 4 ist gezeigt, wie der Statorzahn 12 der elektrischen Maschine aus dem anisotropen weichmagnetischen Material 36 aufweisen kann, indem nämlich der ganze Zahnhals in Form des Steges 22 aus dem Material 36 hergestellt ist. Der Zahnkopf, welcher durch den Polschuh 24 gebildet ist, kann weiterhin aus einem isotropen weichmagnetischen Material bestehen. Durch die Kombination des Polschuhs aus weichmagnetischem isotropem Material und des Steges 22 aus dem anisotropem Material 36 ergibt sich weiterhin eine günstige Flussverteilung im Luftspalt L, die nicht oder nur insignifikant von dem Material 36 des Stegs 22. Das Material kann insbesondere in der beschriebenen Weise NeFeB aufweisen.

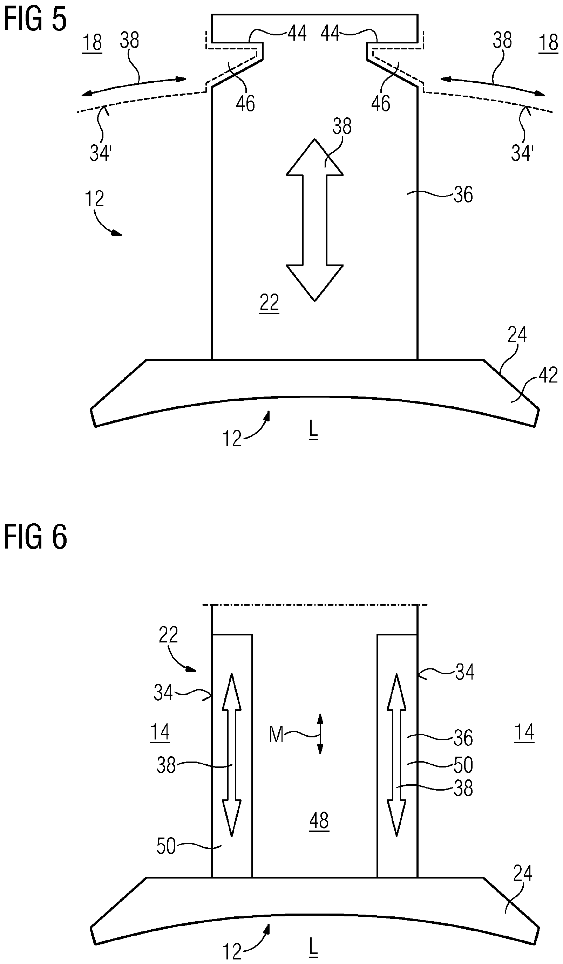

In FIG 5 ist dargestellt, wie der Statorzahn oder Steg 22 im Magnetjoch 18 verankert oder befestigt sein kann. Der Steg 22 kann hierbei aus dem magnetisch anisotropen Material 36 gebildet sein. An das Material 36 werden durch die dargestellte Anordnung keine besonderen mechanische Anforderung gestellt. Der Steg 22 kann Gleitnuten 44 aufweisen, in welche Gleitschienen 46 des Magnetjochs 38 eingreifen können. Der Steg 22 ist hierdurch über einen Formschluss in dem Magnetjoch 18 gehalten. Die Gleitschienen 46 stellen eine Führungseinrichtung dar. Die Anordnung kann auch andersrum mit Gleitschienen an den Steg 22 und entsprechenden Gleitnuten im Magnetjoch 18 ausgestaltet sein. Durch die Anordnung aus Gleitnut 44 und Gleitschiene 46 kann der Zahnhals, das heißt der Steg 22, für eine bessere Fertigbarkeit mit einer entsprechenden Passung versehen werden, sodass er in das Magnetjoch 18 eingeschoben werden kann.

Das Magnetjoch 18 kann aus einem isotropen weichmagnetischen Werkstoff gefertigt sein oder ebenfalls aus anisotropem weichmagnetischem Material mit leichter Achse entlang des Innenumfangs 20 ausgestaltet sein, um Streuflüsse außerhalb des Aktivteils der elektrischen Maschine E zu reduzieren. Mit anderen Worten ist die leichte Achse 38 parallel zu einer Ebene eines Nutbodens 34' der Nuten 14 ausgerichtet. Dies kann besonders in sensiblen Umgebungen bezüglich elektromagnetischer Verträglichkeit von Vorteil sein.

In FIG 6 ist eine erfindungsgemäße Ausführungsform gezeigt, die speziell bei großen Motoren vorteilhaft ist. In FIG 6 sind die Wicklungen 16 wieder nicht dargestellt. Bei dem Steg 22 ist ein Stegkern 48 aus einem isotropen weichmagnetischen Material gefertigt. Die Nutwandungen 38 weisen eine Schicht 50 aus dem magnetisch anisotropen Material 36 auf. Die leichte Achse 38 ist in der beschriebenen Weise bevorzugt parallel zur Spulenachse M ausgerichtet. Die Schicht 50 verkleidet die Zahnhälse längsseitig mit der im Material 36. Bei einem Rotor ergibt-sich eine Ausrichtung der leichten Achse 38 radial oder diametral im Querschnitt der Rotationsmaschine. Vorteil dieser Ausführung ist, dass der Stator S einen konventionellen Aufbau beispielsweise aus einem Blechpaket aufweisen kann und dennoch die Nutstreuung 32 mittels der Schicht 50 reduziert wird.

Bisher wurden Statorzähne von elektrischen Maschinen aus Elektroblech oder einem anderen magnetisch isotropen Material hergestellt. Eine Verwendung des beschriebenen anisotropen weichmagnetischen Materials als Werkstoff ist vorteilhaft zur Reduktion der Nutstreuung 32, sodass sich ein geringerer Spannungsbedarf ergibt. Damit kann die Windungszahl der Maschine erhöht werden. Dies führt zu einem reduzierten Strombedarf, was zu Kostensenkung bei Stromrichtern und Motor führt. Die reduzierte Stromverdrängung senkt die Motorverluste und ermöglicht damit eine Erhöhung der Maschinenleistung.

Durch die Verwendung von anisotropem weichmagnetischem Material kann nämlich der magnetische Fluss in den Zähnen besser kanalisiert werden und ein Austreten der Feldlinien in den Nutraum verhindert werden. Das anisotrope Material weist bevorzugt die Eigenschaft auf, dass seine leichte magnetische Achse eine relative Permeabilität von mehr als 15, insbesondere mehr als 20, aufweist und alle anderen Achsen orthogonal zu dieser leichten Achse eine deutlich geringere Permeabilität aufweisen, insbesondere weniger als 5, insbesondere weniger als 2.

Wird die leichte Achse des anisotropen weichmagnetischen Materials in der gewünschten Flussrichtung angeordnet, so wird den Flusslinien der Austritt aus dem Zahnbereich erschwert. In Folge sinkt die Nutstreuinduktivität, die bei allen Maschinen vorhanden ist, aber nicht zur Drehmomenterzeugung beiträgt. Eine geringere Streuinduktivität verbessert auch den Leistungsfaktor cosphi. Ferner werden die Stromverdrängung in den Leitern der Spulenwicklungen sowie Kreisströme (oftmals auch als Schlingströme bezeichnet) bei parallel geschalteten Teilleitern einer Spule reduziert.

Insgesamt wird durch die Bespiele gezeigt, wie durch die Erfindung der magnetische Streufluss in Nuten eines Stators und/oder eines Läufers gering gehalten werden kann.

## Patentansprüche

1. Aktivteil (S) für eine elektrische Maschine (E), wobei das Aktivteil (S) als Stator (S) oder Läufer (10) ausgestaltet ist und zumindest zwei Nuten (14) zum jeweiligen Anordnen einer elektrischen Spulenwicklung (16) einer elektrischen Spule (W) und zumindest einen zwischen zwei benachbarten Nuten (14) angeordneten Steg (22) zum Führen eines magnetischen Flusses (30) durch die Spule, welche den Steg (22) umgibt, aufweist, wobei der Steg (22) zum Führen des magnetischen Flusses (30) ein Material (36) aufweist, das zumindest bereichsweise eine magnetische Anisotropie mit einer leichten Achse (38) und einer schweren Achse (40) der Magnetisierbarkeit aufweist, und die leichte Achse (38) parallel oder zumindest in einem Winkel von weniger als 25° zu einer Spulenachse (M) der Spule (W) ausgerichtet ist, **dadurch gekennzeichnet, dass** durch den Steg (22) eine jeweilige Nutenwand (34) jeder der angrenzenden Nuten (14) gebildet ist und in dem Steg (22) die Nutwand (34) das Material (36) aufweist und der Steg (22) einen Kern (48) aus einem isotropen weichmagnetischen Material aufweist.

2. Aktivteil (S) nach Anspruch 1, wobei das Aktivteil (S) als Stator (S) oder Rotor (10) einer Rotationsmaschine (E) ausgestaltet ist.

3. Aktivteil (S) nach einem der vorhergehenden Ansprüche, wobei ein auf dem Steg (22) angeordneter Polschuh (24) aus einem isotropen weichmagnetischen Material (42) bereitgestellt ist.

4. Aktivteil (S) nach einem der vorhergehenden Ansprüche, wobei in dem Material (36) eine Gleitnut (44) oder eine Gleitschiene ausgebildet ist und der Steg (22) in einer korrespondierenden Führungseinrichtung (46) eines Magnetjoches (18) des Aktivteils (S) eingeschoben ist.

5. Aktivteil (S) nach einem der vorhergehenden Ansprüche, wobei das Material (34) nur eine einzige leichte Achse (38) aufweist.

6. Aktivteil (S) nach einem der vorhergehenden Ansprüche, wobei die schwere Achse (40) senkrecht zur leichten Achse (38) ausgerichtet ist.

7. Aktivteil (S) nach einem der vorhergehenden Ansprüche, wobei eine relative magnetische Permeabilität des Materials (36) entlang der leichten Achse (38) einen Wert größer als 15, insbesondere größer als 20, und entlang der schweren Achse (40) einen Wert kleiner als 5, insbesondere kleiner als 2, aufweist.

8. Aktivteil (S) nach einem der vorhergehenden Ansprüche, wobei eine magnetische Sättigung des Materials (36) bei einer Flussdichte von mehr als 0,8 Tesla, insbesondere bei mindestens 1,0 Tesla, liegt.

9. Aktivteil (S) nach einem der vorhergehenden Ansprüche, wobei das Material (36) Neodym-Eisen-Bor, NdFeB, aufweist.

10. Aktivteil (S) nach einem der vorhergehenden Ansprüche, wobei ein Magnetjoch (18) des Aktivteils (S) ebenfalls ein magnetisch anisotropes Material (36) aufweist und in dem Magnetjoch (18) eine leichte Achse (38) des Materials (36) parallel zu einem Nutboden der Nuten (34') oder zumindest in einem Winkel von weniger als 25° zu einer Ebene des Nutbodens (34') ausgerichtet ist.

11. Elektrische Maschine (E) mit einem Stator (S) mit elektrischen Spulen (W) und mit einem Läufer (10), **dadurch gekennzeichnet , dass** der Stator (S) und/oder der Läufer (10) jeweils ein Aktivteil nach einem der vorhergehenden Ansprüche aufweist.

12. Verfahren zum Herstellen eines Aktivteils (S) nach einem der Ansprüche 1 bis 10, mit dem Schritt:
- Ausbilden von Nuten (14) zum Anordnen von Spulenwicklungen (16) einer jeweiligen elektrischen Spule (W) und Ausbilden jeweils eines Stegs (22) zwischen benachbarten Nuten (14)
- in einem Material (36) jedes Stegs(22) jeweils Bereitstellen einer magnetischen Anisotropie, wobei bei jedem Steg (22) eine leichte Achse (38) der Anisotropie parallel oder zumindest in einem Winkel von weniger als 25° zu einer Spulenachse (M) der Spule (W), deren Spulenwicklungen (16) in den jeweils angrenzenden Nuten (14) anzuordnen sind, ausgerichtet wird,
**gekennzeichnet durch** den Schritt, dass durch den Steg (22) eine jeweilige Nutenwand (34) jeder der angrenzenden Nuten (14) gebildet wird und in dem Steg (22) die Nutwand (34) das Material (36) aufweist und der Steg (22) einen Kern (48) aus einem isotropen weichmagnetischen Material aufweist.

13. Verfahren nach Anspruch 12, wobei der Steg (22) durch Pressen eines Pulvers und/oder Granulats, welches jeweils das Material (36) enthält, und gleichzeitiges Beaufschlagen mit einem Magnetfeld ausgebildet wird.

## Claims

1. Active part (S) for an electric machine (E), wherein the active part (S) is configured as a stator (S) or rotor (10) and has at least two slots (14) for respectively arranging an electric coil winding (16) of an electric coil (W) and at least one crosspiece (22) which is arranged between two adjacent slots (14) and has the purpose of conducting magnetic flux (30) through the coil which surrounds the crosspiece (22), wherein the crosspiece (22) for conducting the magnetic flux (30) has a material (36) which has, at least in certain areas, magnetic anisotropy with an easy magnetization axis (38) and a hard magnetization axis (40), and the easy axis (38) is oriented parallel or at least at an angle of less than 25° with respect to a coil axis (M) of the coil (W), **characterized in that** the crosspiece (22) forms a respective slot wall (34) of each of the adjacent slots (14), and in the crosspiece (22) the slot wall (34) has the material (36), and the crosspiece (22) has a core (48) made of an isotropic soft-magnetic material.

2. Active part (S) according to Claim 1, wherein the active part (S) is configured as a stator (S) or rotor (10) of a rotary machine (E).

3. Active part (S) according to one of the preceding claims, wherein a pole shoe (24) which is arranged on the crosspiece (22) and is composed of an isotropic soft-magnetic material (42) is made available.

4. Active part (S) according to one of the preceding claims, wherein a sliding slot (44) or a sliding rail is formed in the material (36), and the crosspiece (22) is inserted into a corresponding conduction device (46) of a magnet yoke (18) of the active part (S).

5. Active part (S) according to one of the preceding claims, wherein the material (34) has just one single easy axis (38).

6. Active part (S) according to one of the preceding claims, wherein the hard axis (40) is oriented perpendicularly with respect to the easy axis (38).

7. Active part (S) according to one of the preceding claims, wherein a relative magnetic permeability of the material (36) along the easy axis (38) has a value greater than 15, in particular greater than 20, and along the hard axis (40) has a value less than 5, in particular less than 2.

8. Active part (S) according to one of the preceding claims, wherein magnetic saturation of the material (36) occurs at a flux density of more than 0.8 tesla, in particular at at least 1.0 tesla.

9. Active part (S) according to one of the preceding claims, wherein the material (36) has neodymium iron boron, NdFeB.

10. Active part (S) according to one of the preceding claims, wherein a magnet yoke (18) of the active part (S) also has a magnetically anisotropic material (36), and in the magnet yoke (18) an easy axis (38) of the material (36) is oriented parallel to a slot base of the slots (34') or at least at an angle of less than 25° with respect to a plane of the slot base (34').

11. Electric machine (E) having a stator (S) with electric coils (W) and having a rotor (10), **characterized in that** the stator (S) and/or the rotor (10) each have an active part according to one of the preceding claims.

12. Method for manufacturing an active part (S) according to one of Claims 1 to 10, having the step:
- forming slots (14) for arranging coil windings (16) of a respective electric coil (W) and forming in each case one crosspiece (22) between adjacent slots (14),
- making available magnetic anisotropy in each case in a material (36) of each crosspiece (22), wherein at each crosspiece (22) an easy axis (38) of the anisotropy is oriented parallel to or at least at an angle of less than 25° with respect to a coil axis (M) of the coil (W), the coil windings (16) of which are to be arranged in the respectively adjoining slots (14),
**characterized by** the step that
a respective slot wall (34) of each of the adjacent slots (14) is formed by the crosspiece (22), and in the crosspiece (22) the slot wall (34) has the material (36), and the crosspiece (22) has a core (48) made of an isotropic soft-magnetic material.

13. Method according to Claim 12, wherein the crosspiece (22) is formed by pressing a powder and/or granulate which contains in each case the material (36), and simultaneously applying a magnetic field thereto.

## Revendications

1. Pièce active (S) pour une machine électrique (E), la pièce active (S) se présentant sous la forme d'un stator (S) ou d'un rotor (10) et comprenant au moins deux rainures (14) pour l'agencement respectif d'un enroulement de bobine électrique (16) d'une bobine électrique (W) et au moins une entretoise (22) agencée entre deux rainures (14) voisines pour le guidage d'un flux magnétique (30) à travers la bobine qui entoure l'entretoise (22), dans laquelle l'entretoise (22) pour le guidage du flux magnétique (30) comprend un matériau (36) qui possède au moins par endroits une anisotropie magnétique avec un axe léger (38) et un axe lourd (40) de l'aptitude à l'aimantation, et l'axe léger (38) est orienté parallèlement à ou au moins selon un angle inférieur à 25° par rapport à un axe de bobine (M) de la bobine (W), **caractérisée en ce qu'**une paroi de rainure (34) respective de chacune des rainures (14) adjacentes est formée de part et d'autre de l'entretoise (22) et la paroi de rainure (34) comprend dans l'entretoise (22) le matériau (36) et l'entretoise (22) comprend un noyau (48) en un matériau magnétique doux isotrope.

2. Pièce active (S) selon la revendication 1, la pièce active (S) se présentant sous la forme d'un stator (S) ou d'un rotor (10) d'une machine tournante (E).

3. Pièce active (S) selon l'une des revendications précédentes, dans laquelle est fourni un sabot polaire (24) en un matériau magnétique doux isotrope (42) agencé sur l'entretoise (22).

4. Pièce active (S) selon l'une des revendications précédentes, dans laquelle dans le matériau (36) est conçu(e) une rainure de glissement (44) ou un rail de glissement et l'entretoise (22) est insérée dans un dispositif de guidage (46) correspondant d'une culasse d'aimant (18) de la pièce active (S).

5. Pièce active (S) selon l'une des revendications précédentes, dans laquelle le matériau (34) comprend uniquement un seul axe léger (38).

6. Pièce active (S) selon l'une des revendications précédentes, dans laquelle l'axe lourd (40) est orienté perpendiculairement à l'axe léger (38).

7. Pièce active (S) selon l'une des revendications précédentes, dans laquelle une perméabilité magnétique relative du matériau (36) présente le long de l'axe léger (38) une valeur supérieure à 15, en particulier supérieure à 20, et le long de l'axe lourd (40) une valeur inférieure à 5, en particulier inférieure à 2.

8. Pièce active (S) selon l'une des revendications précédentes, dans laquelle une saturation magnétique du matériau (36) existe à une densité de flux de plus de 0,8 Tesla, en particulier à au moins 1,0 Tesla.

9. Pièce active (S) selon l'une des revendications précédentes, dans laquelle le matériau (36) comprend du néodyme-fer-bore, NdFeB.

10. Pièce active (S) selon l'une des revendications précédentes, dans laquelle une culasse d'aimant (18) de la pièce active (S) comprend également un matériau magnétiquement anisotrope (36) et, dans la culasse d'aimant (18), un axe léger (38) du matériau (36) est orienté parallèlement à un fond de rainure des rainures (34') ou au moins selon un angle inférieur à 25° par rapport à un plan du fond de rainure (34').

11. Machine électrique (E) avec un stator (S) avec des bobines électriques (W) et avec un rotor (10), **caractérisée en ce que** le stator (S) et/ou le rotor (10) comprennent respectivement une pièce active selon l'une des revendications précédentes.

12. Procédé pour la fabrication d'une pièce active (S) selon l'une des revendications 1 à 10, avec l'étape consistant à :
- constituer des rainures (14) pour l'agencement d'enroulements de bobine (16) d'une bobine électrique respective (W) et constituer respectivement une entretoise (22) entre des rainures (14) voisines
- dans un matériau (36) de chaque entretoise (22), fournir respectivement une anisotropie magnétique, dans lequel, pour chaque entretoise (22), un axe léger (38) de l'anisotropie est orienté parallèlement à ou au moins selon un angle inférieur à 25° par rapport à un axe de bobine (M) de la bobine (W), dont les enroulements de bobine (16) sont à agencer dans les rainures (14) respectivement adjacentes,
**caractérisé par** l'étape dans laquelle une paroi de rainure (34) respective de chacune des rainures (14) adjacentes est formée de part et d'autre de l'entretoise (22) et la paroi de rainure (34) comprend dans l'entretoise (22) le matériau (36) et l'entretoise (22) comprend un noyau (48) en un matériau magnétique doux isotrope.

13. Procédé selon la revendication 12, dans lequel l'entretoise (22) est constituée par compression d'une poudre et/ou de granulés, qui contiennent respectivement le matériau (36), et exposition simultanée à un champ magnétique.
